# EUROPEAN PATENT SPECIFICATION

(11) **EP 3 188 075 B1**
(45) Date of publication and mention of the grant of the patent: **22.02.2023**
(21) Application number: 16181893.5
(22) Date of filing: 29.07.2016
(51) Int. Cl.: A63F 13/212, A63F 13/211, A63F 13/00, G06F 3/01, A63F 13/213, A63F 13/25, A63F 13/26, A63F 13/5255, G02B 27/01, G06F 3/03, G06F 3/14, G06F 3/147, G06V 10/147, G06V 20/20, G06V 40/10, G06V 40/20

(54) **APPARATUS AND METHOD FOR RECOGNIZING HAND GESTURES IN A VIRTUAL REALITY HEADSET**
VORRICHTUNG UND VERFAHREN ZUR ERKENNUNG VON HANDGESTEN IN EINEM HEADSET FÜR VIRTUELLE REALITÄT
APPAREIL ET PROCÉDÉ PERMETTANT DE RECONNAÎTRE LES GESTES DE LA MAIN DANS UN CASQUE DE RÉALITÉ VIRTUELLE

(30) Priority: 29.12.2015 US 201514982299; 04.03.2016 KR 20160026357
(43) Date of publication of application: 05.07.2017
(73) Proprietor: Samsung Electronics Co., Ltd., Suwon-si, Gyeonggi-do 16677 (KR)
(72) Inventor: SRIVASTAVA, Gaurav, Sunnyvale, CA California 94086 (US)
(74) Representative: HGF

(56) References cited:
- US-A1- 2012 249 416
- US-A1- 2015 199 824
- Daniel Lau: "LEADING EDGE VIEWS: 3-D Imaging Advances Capabilities of Machine Vision: Part I - Vision Systems Design", , 1 April 2012 (2012-04-01), XP055249233, Retrieved from the Internet: URL:http://www.vision-systems.com/articles /print/volume-17/issue-4/departments/leadi ng-edge-views/3-d-imaging-advances-capabil ities-of-machine-vision-part-i.html [retrieved on 2016-02-11]
- S Thelen ET AL: "Enhancing Large Display Interaction with User Tracking Data", Proceedings of the International Conference on Computer Graphics and Virtual Reality (CGVR), 1 January 2012 (2012-01-01), page 1, XP55366711, Atlanta Retrieved from the Internet: URL:http://world-comp.org/p2012/CGV2412.pd f
- Stephan Richter ET AL: "Bootstrapper : recognizing tabletop users by their shoes", Proceedings of the 2012 ACM annual conference on Human Factors in Computing Systems, CHI '12, 1 January 2012 (2012-01-01), page 1249, XP055714175, New York, New York, USA DOI: 10.1145/2207676.2208577 ISBN: 978-1-4503-1015-4

## Description

### TECHNICAL FIELD

The present application relates generally to virtual reality (VR) headset and, in particular, to apparatus and method for identifying the hand gestures of a user of a VR headset.

### BACKGROUND

There is a need in the art for an improved apparatus and method for identifying hand gesture of the user of a virtual reality (VR) headset for minimize effect by a intruder other than a user of the VR headset.

US 2012/249416 A1 discloses systems and methods for rendering images in a virtual or augmented reality system that may include capturing scene images of a scene in a vicinity of a first and a second projector, capturing spatial data with a sensor array in the vicinity of the first and second projectors, analyzing captured scene images to recognize body parts, and projecting images from each of the first and the second projectors with a shape and orientation determined based on the recognized body parts.

US 2015/199824 A1 discloses an apparatus and method for detecting a plurality of arms and hands by using a 3D image.

### SUMMARY

To address the above-discussed deficiencies of the prior art, a virtual reality (VR) headset configured to be worn by a user is provided.

The invention is defined by the independent claims. Further aspects of the invention are outlined in the dependent claims. When the term embodiment is used for describing unclaimed combination of features, the term has to be understood as referring to examples useful for understanding the present invention.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1A is a perspective view of a virtual reality (VR) headset according to one embodiment of the disclosure.
FIGURE 1B is a front view of a VR headset according to one embodiment of the disclosure.
FIGURE 2 illustrates a hand gesture detection operation of a VR headset according to one embodiment of the disclosure.
FIGURE 3 illustrates detected hands in the field of view of the forward-looking vision sensor and detected arms in the field of view of the downward-looking vision sensor of a VR headset according to one embodiment of the disclosure.
FIGURE 4 is a schematic block diagram of a VR headset according to one embodiment of the disclosure.
FIGURE 5 is a flow diagram illustrating the operation of a VR headset according to one embodiment of the disclosure.
FIGURE 6 is a flow diagram for determining whether an identified hand is an object of a user of a VR headset according to one embodiment of the disclosure.
FIGURE 7 is a flow diagram for ignoring a hand gesture of an intruder other than a user of a VR headset according to one embodiment of the disclosure.
FIGURE 8 is a flow diagram for determining whether a gesture of an intruder other than a user of a VR headset is permitted according to one embodiment of the disclosure.

### DETAILED DESCRIPTION

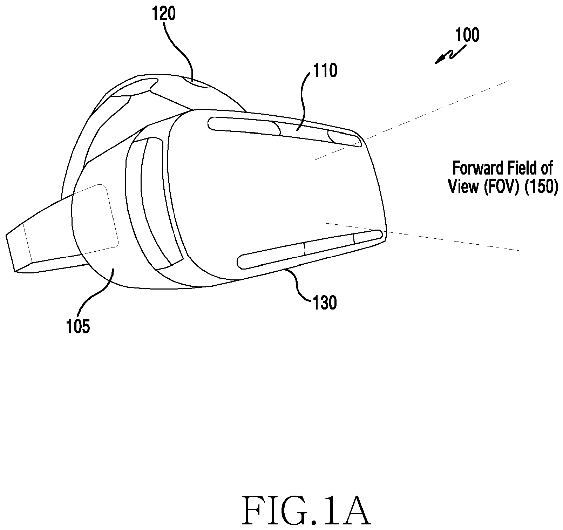

FIGURES 1A through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged virtual reality headset.

In the disclosure below, the phrase "virtual reality" will be used generically for both virtual reality and augmented reality in order to simplify the descriptions that follow. Also, the following terms have the following meanings unless otherwise specified: i) "vision sensor" refers to any video camera (e.g., RGB camera), depth sensor, or motion detection circuitry device; ii) "main user" or "user" refers to the person actually wearing and operating the virtual reality (VR) head mounted display (HMD) or headset; and iii) "intruder" refers to any person other than the user whose hand gestures are intentionally or accidentally triggering undesirable effects on the VR user interface of the HMD/headset.

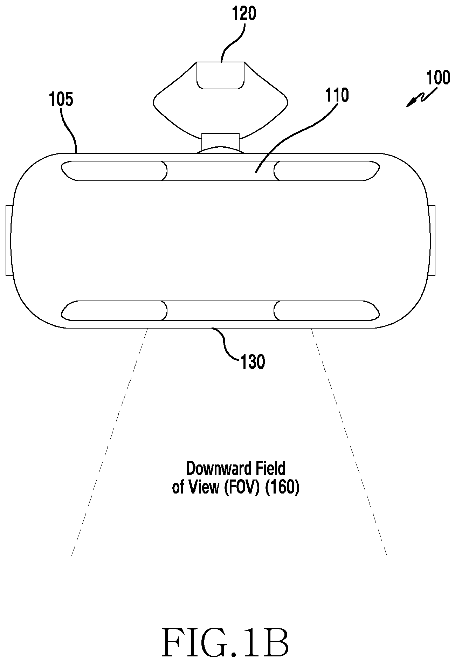

FIGURE 1A is a perspective view of VR headset 100 according to one embodiment of the disclosure. FIGURE 1B is a front view of VR headset 100 according to one embodiment of the disclosure. VR headset 100 comprises chassis (or housing) 105, forward vision sensor 110, head strap 120, and downward vision sensor 130. Chassis 105 houses the electronics of VR headset 100. A user places VR headset 100 on his or her head and tightens head strap 120 to hold VR headset 100 in place. Forward vision sensor 110 captures forward field of view (FOV) 150 and displays forward FOV 150 on the internal display of VR headset 100. The user may then view on the internal display any objects in the forward FOV 150.

When the forward vision sensor 110 and the internal processor(s) of VR headset 100 detect a hand in forward FOV 150 for the purpose of determining hand gestures, it may be difficult to determine whether the hand belongs to the main user or to an intruder. It is necessary to prevent a hand gesture from an intruder from causing undesirable interference to the user interface. The present disclosure provides a method of distinguishing legitimate user hand gestures from intruder hand gestures by using downward vision sensor 130, which captures downward FOV 160. Downward vision sensor 130 and the internal processor(s) of VR headset 100 are operable to detect and to identify the arm(s) of the user in downward FOV 160 and then to correlate and/or to associate the user hand movements with the user arm movements. In this way, VR headset 100 is capable of determining if a detected hand in the forward FOV 150 belongs to the legitimate user of VR headset 100 or to an intruder. Once this determination is made, the internal processor(s) of VR headset 100 will only process hand gesture commands from the user and will ignore hand gestures from an intruder.

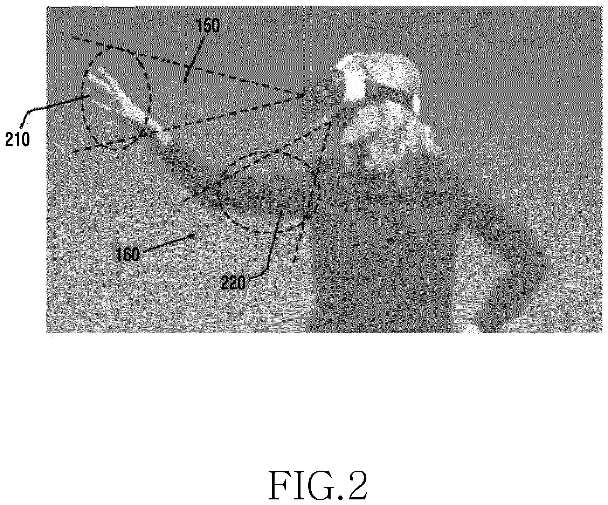

FIGURE 2 illustrates a hand gesture detection operation of VR headset 100 according to one embodiment of the disclosure. In FIGURE 2, the user extends her arm and hand forward to interact with object(s) in the virtual world. Forward vision sensor 110 detects user hand 210 in forward FOV 150 and downward vision sensor 130 detects user arm 220 in downward FOV 160. VR headset 110 then determines whether user hand 210 belongs to the user by comparing the alignments and/or positions of user hand 210 and user arm 220. VR headset 110 may also determine whether user hand 210 belongs to the user by comparing the relative movements of user hand 210 and user arm 220. The tracked movements may include left-right (lateral) movement of the hands and arms, up-down (vertical) movement of the hands and arms, and/or forward-backward (extension) movements of the hands and arms away from or toward the body of the user.

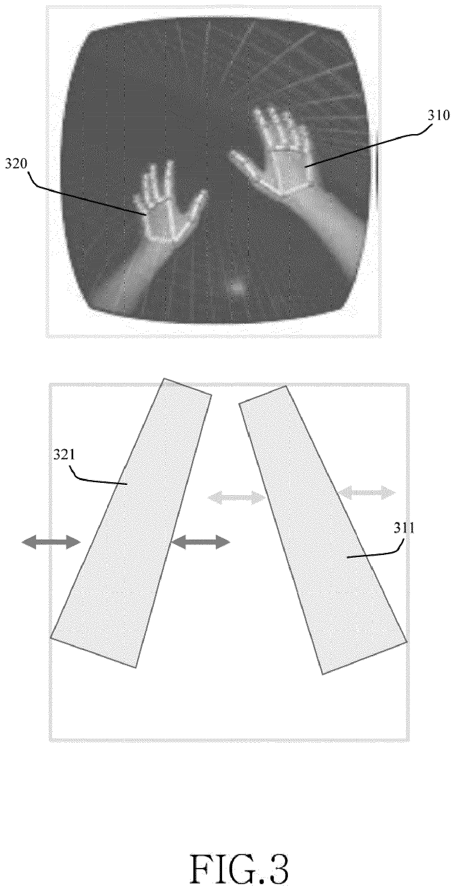

FIGURE 3 illustrates detected hands 310 and 320 in forward FOV 150 of forward vision sensor 110 and detected arms 311 and 321 in the downward FOV 160 of downward vision sensor 130 of VR headset 100 according to one embodiment of the disclosure. Generally, the user will only see detected hands 310 and 320 in forward FOV 150 on the internal display of VR headset 100. Detected arms 311 and 321 are only seen and analyzed by the internal processor(s) of VR headset 100. In FIGURE 3, the lateral movements of detected arms 311 and 321 (indicted by left-right arrows) may be correlated with similar lateral movements of detected hands 310 and 320, thereby identifying detected hands 310 and 320 as the hands of the user of VR headset 100 and not the hands of an intruder.

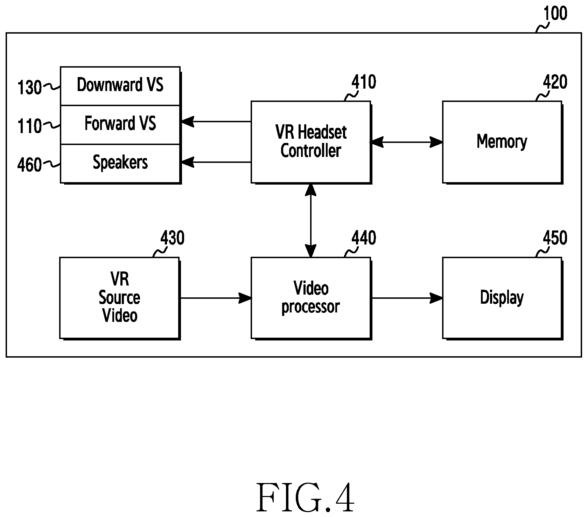

FIGURE 4 is a schematic block diagram of VR headset 100 according to one embodiment of the disclosure. VR headset 100 comprises forward vision sensor (VS) 110 and downward VS 130. VR headset 100 further comprises VR headset controller 410, memory 420, VR source video 430, video processor 440, display 450, and speakers 460. In an exemplary embodiment, forward VS 110 and downward VS 130 may comprise conventional video cameras (e.g., RGB video cameras).

VR headset controller 410 is a microprocessor or microcontroller that controls the overall operation of VR headset 410 by executing an operating system program and one or more application programs stored in memory 420. Video processor 440 receives source video from VR source video 430, which video processor 440 then displays on one or more screens of display 450. VR source video 430 may be an external VR video player coupled wirelessly or by wireline to VR headset 410. Alternatively, VR source video 430 may be an internal memory (including a part of memory 420), in which VR video content is stored. In camera mode, VR headset controller 410 directs the real-world outputs of forward VS 110 and downward VS 130 to video processor 440 so that the user can see the real-world around the user on display 450, as well as augmented reality (AR) video content.

According to the principles of the disclosure, VR headset controller 410 is configured to direct video processor 440 to detect the hand(s) of the user in forward FOV 150 in the video output of forward VS 110 and to detect the arm(s) of the user in downward FOV 160 in the video output of downward VS 130. VR headset controller 410 is further configured to direct video processor 440 to correlate and/or to associate the user hand movements with the user arm movements. In this way, video processor 440 is capable of determining if a detected hand in forward FOV 150 belongs to the legitimate user of VR headset 100 or to an intruder.

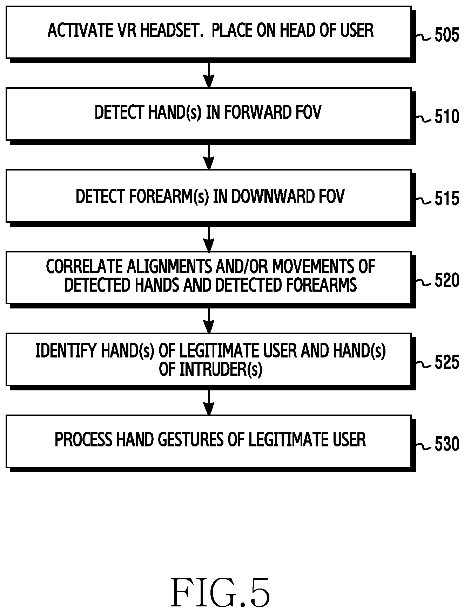

FIGURE 5 is a flow diagram illustrating the operation of VR headset 100 according to one embodiment of the disclosure. Initially, the user activates VR headset 100 and places VR headset 100 on his or her head (step 505). After activation, the user may launch an application that may be controlled by user hand gestures. In response, video processor 440 detects one or more hand(s) in forward FOV 150 (step 510). Video processor 440 also detects a portion (e.g., a forearm) of at least one arm of the user in downward FOV 160 (step 515).

Video processor 440 then attempts to determine if a detected hand in forward FOV 150 is the hand of the user or an intruder. Video processor 440 may do this by comparing and analyzing detected objects in forward FOV 150 and downward FOV 160 in order to correlate the alignments and/or movements of a detected hand(s) and a detected forearm(s) (step 520). From this comparison, video processor 440 identifies the hand(s) of the legitimate user of VR headset 100 and ignores the detected hand(s) of intruder(s) (step 525). Thereafter, video processor 440 and/or VR headset controller 410 process the hand gestures of legitimate user (step 530).

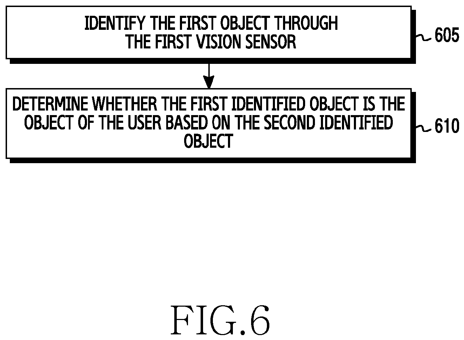

FIGURE 6 is a flow diagram for determining whether an identified hand is an object of a user of VR headset according to one embodiment of the disclosure.

VR headset 100 identifies a first object through a first vision sensor (step 605). The first vision sensor is a forward vision sensor. The first object is hand 210 of the user. VR headset 100 determines whether the first identified object is the object of the user, based on a second identified object through a second vision sensor (step 610). The second vision sensor is downward vision sensor 130. The second object is arm 220 of the user.

VR headset 100 determines whether the first identified object is the object of the user by determining whether the first identified object is correlated with the second identified object. If the first identified object is the object of the user, VR headset 100 permits an input by the first identified object and ignores an input by the intruder. Also, VR headset 100 may determine the object of the user, using the first vision sensor and the second vision sensor, and not using an additional hardware (e. g. armband). The intruder may mean a third party.

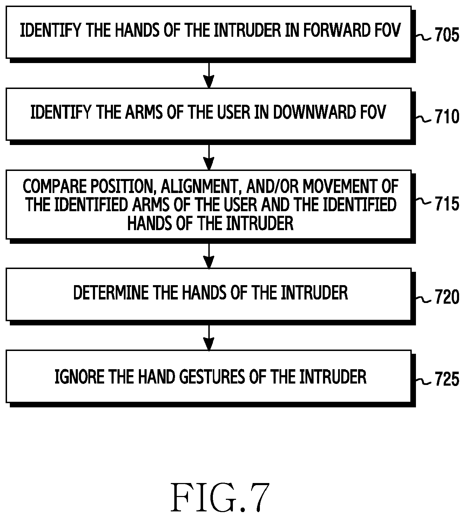

FIGURE 7 is a flow diagram for ignoring a hand gesture of an intruder other than a user of VR headset according to one embodiment of the disclosure.

VR headset 100 identifies hands of an intruder in forward FOV 150 (step 705). VR headset 100 determines whether the identified hands are hands of the intruder according to various embodiment of the disclosure. VR headset 100 identifies arms 311 and 321 of the user of VR headset 100 in downward FOV 160 (step 710). FIGURE 7 illustrates the flow diagram that step 705 and step 710 is performed in the order but each step may be performed simultaneously. Also, step 705 and step 710 may be performed in reverse order according to implementation method. VR headset 100 compare the identified objects in forward FOV 150 and downward FOV 160 to determine whether positions, alignments, and/or movements is correlated with the identified hands and the identified arms 311 and 321 (step 715). For example, VR headset 100 may determine the identified objects using a method corresponding to the method described step 520 of FIGURE 5. VR headset 100 determines the hands of the intruder (step 720). In other words, VR headset 100 determines the hands of the intruder among the objects compared in step 715. VR headset 100 ignores hand gestures of the intruder (step 725). As a result, VR headset 100 may prevent the hand gestures of the intruder from causing undesirable effect to user interface.

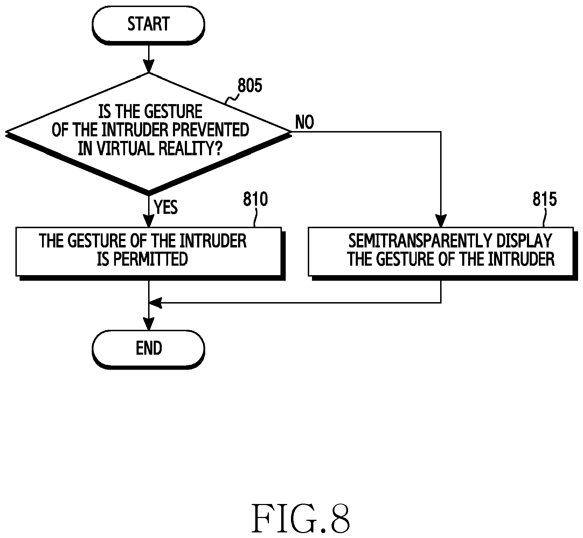

FIGURE 8 is a flow diagram for determining whether a gesture of an intruder other than a user of VR headset is permitted according to one embodiment of the disclosure which is not claimed.

VR headset 100 determines whether the gesture of the intruder is permitted in VR (step 805). If VR headset 100 permits the gesture of the intruder in VR, VR headset 100 may permit an input by the gesture of the intruder in an application (step 810). For example, if VR headset 100 permits the gesture of the intruder, VR headset 100 may implement the application that both the user and the intruder may cooperatively use. If VR headset 100 ignores the gesture of the intruder in VR, VR headset 100 may semitransparently display the gesture of the intruder (step 815). As a result, VR headset 100 may identify exist of an object of the intruder in forward FOV by displaying the gesture of the intruder semitransparently in VR.

Although the present disclosure has been described with an exemplary embodiment, various changes and modifications may be suggested to one skilled in the art. It is intended that the present disclosure encompass such changes and modifications as fall within the scope of the appended claims.

## Claims

1. A virtual reality, VR, head-mounted display, HMD, apparatus (100) comprising:
a detector comprising a first vision sensor (110) and a second vision sensor (130); and
a controller (410) operatively coupled with the detector,
wherein the controller (410) is configured to:
capture a first image comprising a first object through the first vision sensor (110);
identify (605) the first object from the first image,
capture a second image comprising a second object through the second vision sensor (130);
identify the second object from the second image; and
identify (610) whether the first object is an object of a user of the VR HMD apparatus (100), based on at least one of a relative position, a relative movement, or a relative alignment of the first object and the second object;
wherein the first vision sensor (110) is a forward facing camera and the second vision sensor (130) is a downward facing camera; and
wherein the first object is a hand and the second object is an arm of the user.

2. The VR HMD apparatus (100) as set forth in claim 1, wherein the controller (410) is further configured to:
identify (705) a third object through the first vision sensor (110), and
identify (720) whether the third object is an object belonging to another party other than the user, based on at least one of a relative position, a relative movement, or a relative alignment of the second object and the third object; and
wherein the third object is a hand.

3. A method of operating a virtual reality, VR, head-mounted display, HMD, apparatus (100) comprising:
capturing a first image comprising a first object through the first vision sensor (110);
identifying (605) the first object from the first image;
capturing a second image comprising a second object through the second vision sensor (130);
identifying the second object from the second image; and
identifying (610) whether the first object is an object of a user of the VR HMD apparatus (100), based on at least one of a relative position, a relative movement, or a relative alignment of the first object and the second object;
wherein the first vision sensor (110) is a forward facing camera and the second vision sensor (130) is a downward facing camera; and
wherein the first object is a hand and the second object is an arm of the user.

4. The method as set forth in claim 3, further comprising:
identifying (705) a third object through the first vision sensor (110); and
identifying (720) whether the third object is an object of another party other than the user, based on at least one of a relative position, a relative movement, or a relative alignment of the second object and the third object;
wherein the third object is a hand.

## Patentansprüche

1. Vorrichtung einer kopfmontierten Anzeige, HMD, für virtuelle Realität, VR, (100), umfassend:
einen Detektor, umfassend einen ersten Bildsensor (110) und einen zweiten Bildsensor (130); und
eine Steuerung (410), die funktionsfähig mit dem Detektor gekoppelt ist,
wobei die Steuerung (410) zu Folgendem konfiguriert ist:
Aufnehmen eines ersten Bilds, umfassend ein erstes Objekt durch den ersten Bildsensor (110);
Identifizieren (605) des ersten Objekts anhand des ersten Bilds,
Aufnehmen eines zweiten Bilds, umfassend ein zweites Objekt durch den zweiten Bildsensor (130);
Identifizieren des zweiten Objekts anhand des zweiten Bilds; und
Identifizieren (610), ob das erste Objekt ein Objekt eines Benutzers der VR-HMD-Vorrichtung (100) ist, basierend auf mindestens einer von einer relativen Position, einer relativen Bewegung oder einer relativen Ausrichtung des ersten Objekts und des zweiten Objekts;
wobei der erste Bildsensor (110) eine nach vorne gerichtete Kamera ist und der zweite Bildsensor (130) eine nach unten gerichtete Kamera ist; und
wobei das erste Objekt eine Hand und das zweite Objekt ein Arm des Benutzers ist.

2. VR-HMD-Vorrichtung (100) nach Anspruch 1, wobei die Steuerung (410) ferner zu Folgendem konfiguriert ist:
Identifizieren (705) eines dritten Objekts durch den ersten Bildsensor (110), und
Identifizieren (720), ob das dritte Objekt ein Objekt ist, das einer anderen Partei als dem Benutzer gehört, basierend auf mindestens einer von einer relativen Position, einer relativen Bewegung oder einer relativen Ausrichtung des zweiten Objekts und des dritten Objekts; und wobei das dritte Objekt eine Hand ist.

3. Vorrichtung einer kopfmontierten Anzeige, HMD, für virtuelle Realität, VR, (100), umfassend:
Aufnehmen eines ersten Bilds, umfassend ein erstes Objekt durch den ersten Bildsensor (110);
Identifizieren (605) des ersten Objekts anhand des ersten Bilds;
Aufnehmen eines zweiten Bilds, umfassend ein zweites Objekt durch den zweiten Bildsensor (130);
Identifizieren des zweiten Objekts anhand des zweiten Bilds; und
Identifizieren (610), ob das erste Objekt ein Objekt eines Benutzers der VR-HMD-Vorrichtung (100) ist, basierend auf mindestens einer von einer relativen Position, einer relativen Bewegung oder einer relativen Ausrichtung des ersten Objekts und des zweiten Objekts;
wobei der erste Bildsensor (110) eine nach vorne gerichtete Kamera ist und der zweite Bildsensor (130) eine nach unten gerichtete Kamera ist; und
wobei das erste Objekt eine Hand und das zweite Objekt ein Arm des Benutzers ist.

4. Verfahren nach Anspruch 3, ferner umfassend:
Identifizieren (705) eines dritten Objekts durch den ersten Bildsensor (110), und
Identifizieren (720), ob das dritte Objekt ein Objekt einer anderen Partei als dem Benutzer ist, basierend auf mindestens einer von einer relativen Position, einer relativen Bewegung oder einer relativen Ausrichtung des zweiten Objekts und des dritten Objekts; wobei das dritte Objekt eine Hand ist.

## Revendications

1. Appareil de visiocasque, HMD, de réalité virtuelle, VR, (100) comprenant :
un détecteur comprenant un premier capteur de vision (110) et un second capteur de vision (130) ; et
un contrôleur (410) couplé fonctionnellement au détecteur,
dans lequel le contrôleur (410) est configuré pour :
capturer une première image comprenant un premier objet par le biais du premier capteur de vision (110) ;
identifier (605) le premier objet à partir de la première image,
capturer une deuxième image comprenant un deuxième objet par le biais du second capteur de vision (130) ;
identifier le deuxième objet à partir de la deuxième image ; et
identifier (610) si le premier objet est un objet d'un utilisateur de l'appareil HMD VR (100), sur la base d'au moins l'un parmi une position relative, un mouvement relatif ou un alignement relatif du premier objet et du deuxième objet ;
dans lequel le premier capteur de vision (110) est une caméra orientée vers l'avant et le second capteur de vision (130) est une caméra orientée vers le bas ; et
dans lequel le premier objet est une main et le deuxième objet est un bras de l'utilisateur.

2. Appareil HMD VR (100) selon la revendication 1, dans lequel le contrôleur (410) est en outre configuré pour :
identifier (705) un troisième objet par le biais du premier capteur de vision (110), et
identifier (720) si le troisième objet est un objet appartenant à une autre partie autre que l'utilisateur, sur la base d'au moins l'un parmi une position relative, un mouvement relatif ou un alignement relatif du deuxième objet et du troisième objet ; et
dans lequel le troisième objet est une main.

3. Procédé de fonctionnement d'un appareil de visiocasque, HMD, de réalité virtuelle, VR, (100) comprenant :
la capture d'une première image comprenant un premier objet par le biais du premier capteur de vision (110) ;
l'identification (605) du premier objet à partir de la première image ;
la capture d'une deuxième image comprenant un deuxième objet par le biais du second capteur de vision (130) ;
l'identification du deuxième objet à partir de la deuxième image ; et
l'identification (610) si le premier objet est un objet d'un utilisateur de l'appareil HMD VR (100), sur la base d'au moins l'un parmi une position relative, un mouvement relatif ou un alignement relatif du premier objet et du deuxième objet ;
dans lequel le premier capteur de vision (110) est une caméra orientée vers l'avant et le second capteur de vision (130) est une caméra orientée vers le bas ; et
dans lequel le premier objet est une main et le deuxième objet est un bras de l'utilisateur.

4. Procédé selon la revendication 3, comprenant en outre :
l'identification (705) d'un troisième objet par le biais du premier capteur de vision (110) ; et
l'identification (720) si le troisième objet est un objet d'une autre partie autre que l'utilisateur, sur la base d'au moins l'un parmi une position relative, un mouvement relatif ou un alignement relatif du deuxième objet et du troisième objet ;
dans lequel le troisième objet est une main.
